# FASCICULE DE BREVET EUROPEEN

(11) **EP 3 761 774 B1**
(45) Date de publication et mention de la délivrance du brevet: **10.08.2022**
(21) Numéro de dépôt: 19707843.9
(22) Date de dépôt: 06.03.2019
(51) Int. Cl.: A01C 5/06, A01C 7/20

(54) **ELEMENT SEMEUR COMPORTANT UN ORGANE DE RAPPUI REGLABLE ET SEMOIR CORRESPONDANT**
SÄELEMENT MIT EINSTELLBAREM PRESSELEMENT UND ZUGEHÖRIGE SÄMASCHINE
SEEDING ELEMENT COMPRISING AN ADJUSTABLE PRESS MEMBER AND CORRESPONDING SOWING MACHINE

(30) Priorité: 09.03.2018 FR 1852063
(43) Date de publication de la demande: 13.01.2021
(73) Titulaire: Kuhn SAS, 67700 Saverne (FR)
(72) Inventeur: ANDRES, Christophe, 67700 Waldolwisheim (FR)
(74) Mandataire: Esch, Esther Evelyne
(86) Numéro de dépôt international: PCT/EP2019/055580
(87) Numéro de publication internationale: WO 2019/170753

(56) Documents cités:
- DE-A1-102007 027 089
- DE-A1-102008 008 553
- DE-A1-102015 114 362
- FR-A1- 2 788 657
- US-A1- 2017 367 250

## Description

La présente invention se rapporte au domaine technique général du machinisme agricole et en particulier au domaine du semis.

L'invention porte sur un élément semeur de machine de semis, et notamment un élément semeur, tel qu'un élément monograine, comportant un dispositif de rappui de graine prévu pour améliorer le contact entre la graine et la terre aussitôt son implantation pour lui assurer une bonne germination.

La demande de brevet EP3008987A1 montre un système d'escamotage de roue de rappui mettant en oeuvre un levier pourvu d'une came à deux positions stables et permettant à la roue de rappui d'atteindre une position déployée de travail, et une position escamotée.

La demande de brevet US2008/0184920A1 divulgue en figures 2 et 5, un système de réglage de la force de rappui d'une roue de rappui. Ce système de réglage comporte une tige perforée ajustable selon différentes positions en hauteur. Un bras pivotant portant la roue de rappui est monté sur un support commun à différents outils. Plus précisément, la roue de rappui est montée en une première extrémité du bras pivotant. La tige perforée est reliée via un ressort de traction en une deuxième extrémité du bras pivotant, opposée à la première extrémité. L'action du ressort de traction pousse la roue de rappui contre le sol par effet de levier. Le ressort agit sur le bras pivotant et une goupille amovible permet de maintenir la tige verticale en une position choisie contre le support commun, et ainsi de contrôler la force de rappui.

D'autres configurations existent dans lesquelles il est nécessaire de démonter puis de remonter certaines pièces, comme une paire vis-écrou, pour fixer la roue de rappui dans la position souhaitée.

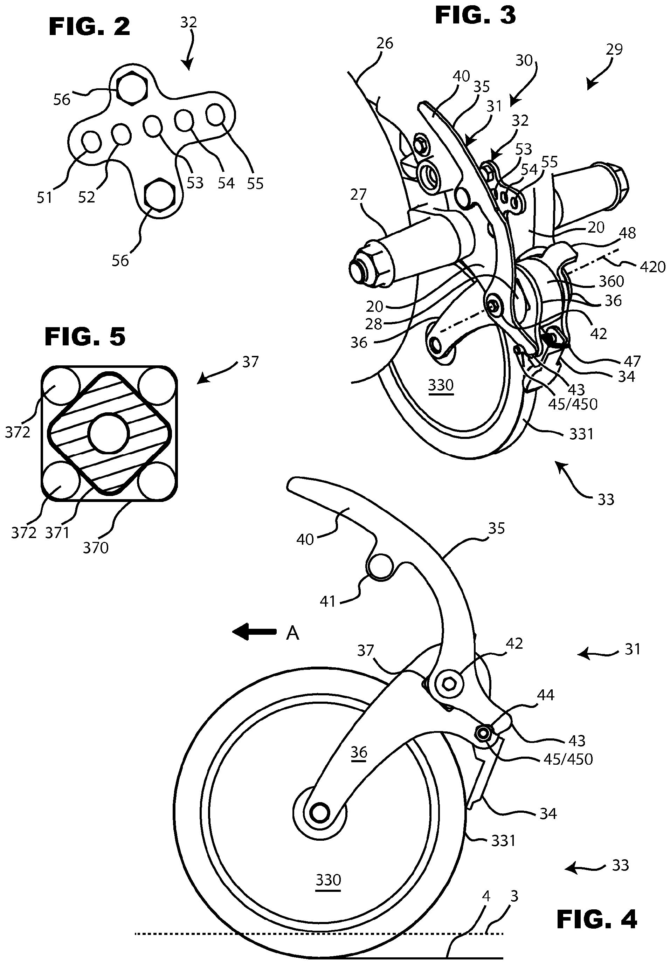

La demande de brevet FR 2788657 A1 concerne un ensemble constitué d'un dispositif de dépôts de grains dans le sol pour semoir et une roue plombeuse associée. Cette dernière évolue sur la partie supérieure du sol comme le montre la figure 3.

La demande de brevet DE 102008008553 A1 concerne un semoir destiné à la répartition de graines et/ou d'engrais dans le sol. Là encore, la roue de rappui 6 n'évolue pas en fond de sillon comme précisé dans le paragraphe [0029] de la description. Des exemples connus dans le domaine technique sont représentés par US 2017/367250 A1 et DE 10 2015 114362 A1.

Dans les solutions connues, le dispositif de rappui n'est pas utilisé lorsque la terre est trop meuble pour ne pas enfoncer la graine trop profondément. De même, lorsque la terre est collante en conditions humides et que la terre et les graines adhèrent à l'organe de rappui, les graines sont implantées irrégulièrement ou ne sont pas implantées là où elles le devraient. Ceci affecte directement le rendement de la récolte. La pratique habituelle est alors de ne pas utiliser l'organe de rappui, soit en l'escamotant, soit en le retirant, ce qui peut demander un temps de montage important pour chaque rang et l'utilisation d'outils pour le démontage. Néanmoins, laisser les graines sans rappui a aussi un effet sur le rendement puisque le contact entre les graines et le sol n'est pas assuré et leur apport en humidité est moindre lors de la germination.

L'objectif de l'invention est de proposer un élément semeur de machine agricole comportant une variante simplifiée et améliorée du système de réglage d'un outil tel que la roue de rappui, permettant un réglage dudit outil sans démontage de pièce. L'invention porte également sur un semoir comportant un tel élément semeur.

L'invention porte donc sur un élément semeur de machine agricole, l'élément semeur comportant un organe de distribution de graines et un dispositif de rappui, le dispositif de rappui étant disposé derrière une sortie de l'organe de distribution de graines dans une direction d'avance au travail de l'élément semeur, le dispositif de rappui comportant un dispositif de réglage et un organe de rappui, l'organe de rappui étant configuré pour exercer une force de rappui dans le fond du sillon dans au moins une position de travail du dispositif de réglage. Selon l'invention, l'organe de rappui comporte une roue de rappui évoluant en fond de sillon, et l'au moins une position de travail du dispositif de réglage est configuré pour une position de délestage dans laquelle le dispositif de réglage exerce sur l'organe de rappui une contrainte de délestage opposée au poids de l'organe de rappui.

L'élément semeur pourvu du dispositif de rappui décrit ci-dessus dispose donc d'au moins une position de délestage de l'organe de rappui dans laquelle la contrainte de rappui s'exerçant dans le fond du sillon et résultant du délestage est moindre que le seul poids de l'organe de rappui. Ceci est particulièrement avantageux lorsqu'un rappui des graines s'impose pour favoriser le contact des graines avec la terre et optimiser leur germination. En effet, avec les solutions connues, dans la position de rappui standard dans laquelle la contrainte de rappui dans le fond du sillon résulte du seul poids de l'organe de rappui, une humidité du sol élevée peut provoquer l'adhérence de la terre et des graines à l'organe de rappui. Dans cette situation, l'implantation des graines est mauvaise voire incorrecte et le rendement en pâtit. L'utilisation de l'organe de rappui est alors possible dans des conditions qui rendaient impossible ou problématique l'utilisation des organes de rappui connus.

En d'autres termes, le dispositif de réglage permet dans l'une au moins de ses positions de travail de soulager l'organe de rappui d'une partie de son poids de manière à limiter la contrainte de rappui en fonction des conditions de semis, notamment les qualités du sol (humidité, composition, condition collante ou non, condition meuble ou non). La versatilité du dispositif de rappui s'en trouve améliorée.

Avantageusement, le dispositif de réglage comporte un organe de liaison élastique qui exerce la contrainte de délestage sur l'organe de rappui dans la position de délestage.

L'application d'une contrainte de délestage sur l'organe de rappui, comprenant ici la roue de rappui, est obtenue simplement, grâce à l'organe de liaison élastique.

Avantageusement, le dispositif de réglage comporte un bras de manipulation, la position du bras de manipulation déterminant la contrainte de délestage que l'organe de liaison élastique exerce sur l'organe de rappui en position de délestage.

Grâce au bras de manipulation, le réglage de l'organe de rappui se fait de manière simple et ne nécessite pas d'outil distinct de l'élément semeur, ni de démontage de pièces.

Dans cette position, la roue de rappui est délestée au moyen de l'organe de liaison élastique sans complexité de mise en oeuvre.

Avantageusement, le dispositif de réglage admet plusieurs positions de travail, l'une d'elles étant ladite position de délestage. Les autres positions de travail peuvent comporter une position de rappui neutre (sans apport de force externe au poids de l'organe de rappui) et/ou au moins une position de rappui renforcé.

La plage de réglage obtenue est ainsi particulièrement avantageuse.

L'invention porte également sur un semoir comportant un élément semeur tel que décrit ci-dessus.

D'autres caractéristiques et avantages de l'invention se dégageront des exemples de réalisation non limitatifs de l'invention qui vont suivre et des dessins annexés dans lesquels :
- la figure 1 est une vue de côté d'un élément semeur pourvu d'un dispositif de rappui et d'un dispositif de réglage de rappui selon l'invention ;
- la figure 2 montre un organe de positionnement du dispositif de réglage de rappui de la figure 1 ;
- la figure 3 montre, vu en perspective, le dispositif de rappui de la figure 1 ;
- la figure 4 est une vue de détail de la roue de rappui munie d'une autre partie du dispositif de réglage de rappui ;
- la figure 5 montre un organe de liaison élastique du dispositif de rappui de la figure 1 ;
- les figures 6 à 8 illustrent schématiquement trois positions de travail -une position de délestage, une position de rappui neutre et une position de rappui renforcé- que peuvent adopter les composants du dispositif de rappui de la figure 1.

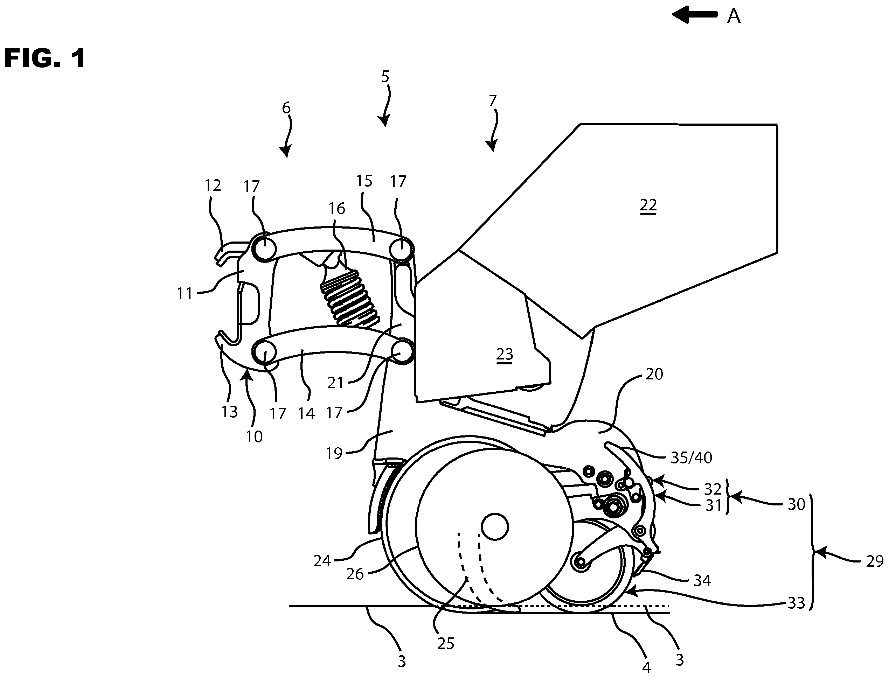

La figure 1 illustre un élément semeur 5 de type monograine, destiné à être monté sur un châssis de semoir monograine non représenté. Au travail, l'élément semeur 5 est destiné à se déplacer au sol 3 selon une direction d'avance au travail A qui est aussi l'orientation longitudinale de l'élément semeur 5. Dans ce qui suit, les termes « avant » et « arrière », « supérieur » et « inférieur », s'entendent par rapport à la direction générale A. Les termes « contrainte » et « force » sont ici utilisés comme synonymes.

L'élément semeur 5 présente un mécanisme déformable 6 et un organe semeur 7.

Le mécanisme déformable 6 comporte en sa partie avant un système d'accrochage 10 destiné à être monté à un châssis de semoir non représenté.

Le système d'accrochage 10 présente un montant avant 11, de préférence sensiblement vertical tel qu'illustré, un crochet inférieur 13 et un crochet supérieur 12. Le crochet inférieur 13 est formé ici de corps avec le montant avant 11. Le crochet supérieur 12 est ici non limitativement réglable par rapport au crochet inférieur 13.

Le mécanisme déformable 6 comporte encore deux bras 14 et 15 chacun relié par un pivot 17 respectif à l'avant au montant avant 11 et à l'arrière à une partie supérieure 21 d'un châssis 19 de l'organe semeur 7. Dans l'élément semeur 5, les deux bras 14 et 15 sont conformés sensiblement parallèlement l'un à l'autre de manière à définir un parallélogramme déformable ayant pour sommets les pivots 17. Ainsi, le mécanisme déformable 6 est capable de suivre le relief du sol 3 lors du travail.

Un organe de réglage 16 comportant ici un ressort de compression est monté à l'un et l'autre des bras 14 et 15 de manière à permettre d'ajuster la pression au sol de l'élément semeur 5.

L'organe semeur 7 comporte ici notamment le châssis 19, une trémie 22, un organe de distribution de graines 23, deux disques ouvreurs 24, un tube de descente 25 (optionnel), deux roues de jauge 26 et un dispositif de rappui 29 (figure 1).

Le châssis 19 a ici sensiblement une forme en L. Le châssis 19 comporte ici une branche supérieure 21, à l'avant du châssis 19. La branche supérieure 21 forme support arrière pour les bras 14 et 15 du mécanisme déformable 6. Le châssis 19 comporte encore une partie arrière 20 formant support pour différents organes au contact du sol (les disques ouvreurs 24, le tube de descente 25, les deux roues de jauge 26) et pour le dispositif de rappui 29. Des supports 27 forment jonction entre la partie arrière 20 et les roues de jauge 26.

Les disques ouvreurs 24 ont pour rôle de former le sillon 4 pour que le tube de descente 25 puisse y déposer les graines.

En variante, l'organe semeur 7 comporte un unique disque ouvreur 24 à l'arrière duquel s'étend le tube de descente 25, ici directement derrière l'axe de rotation du disque.

Le tube de descente 25 forme ici l'organe de sortie de l'organe de distribution de graines 23 et guide la graine dans le fond du sillon 4.

Le dispositif de rappui 29 comporte un dispositif de réglage 30 et un organe de rappui 33.

Le dispositif de rappui 29 est disposé derrière le tube de descente 25 et dans l'alignement du tube de descente 25 dans une direction d'avance au travail de l'élément semeur 5. Cette disposition permet de bloquer les graines dès leur sortie du tube de descente 25 et empêche leur ricochet dans le sillon 4, ce qui est favorable à la régularité du semis et au rendement. Le dispositif de rappui 29 a pour fonction de garantir le contact entre la graine et la terre et favoriser la germination.

En variante non illustrée, l'organe de distribution de graines 23 est disposé bas, c'est-à-dire horizontalement à hauteur des axes de rotation des disques ouvreurs 24. Aucun tube de descente 25 n'est alors prévu. L'organe de distribution de graines 23 peut alors être disposé entre les disques ouvreurs 24 et l'organe de rappui 33.

L'organe de rappui 33 comporte ici une roue de rappui 330 et deux bras de roue 36. La roue de rappui 330 présente ici préférentiellement une bande roulante 331, ou anneau externe, en inox. En variante, la bande roulante est en élastomère ou dans un autre métal ou matériau. La roue de rappui 330 évolue en fond de sillon 4 et a pour rôle de garantir le contact entre les graines et la terre. La roue de rappui 330 est également appelée roue de plombage.

Les bras de roue 36 sont montés pivotants sur la partie arrière 20 du châssis 19 via un pivot 42 d'axe 420. La roue de rappui 330 est montée pivotante entre les bras de roue 36, ici en leur extrémité distale 361, la plus éloignée du pivot 42.

Ici, les bras de roue 36 sont montés sur deux pattes 28 de la partie arrière 20. Les deux pattes 28 s'étendent en saillie vers le bas et vers l'arrière du châssis 19. Les bras de roue 36 s'étendent ici vers l'avant de l'élément semeur 5 de sorte que la roue de rappui 330 est poussée. Ici, une entretoise 360 maintient les deux bras de roue 36 à distance fixe entre eux et en position par rapport aux pattes 28. En variante non illustrée, un bras de roue unique peut être prévu. Une entretoise de longueur adaptée à l'écart souhaité entre le bras de roue unique peut être prévue pour maintenir le bras de roue unique en position par rapport à la partie arrière 20.

Un axe 450 s'étend entre les extrémités proximales 362 des bras de roue 36 opposées à l'extrémité distale 361. Un ressort de torsion 47 et un décrotteur 34 sont montés alignés sur l'axe 450, entre les bras de roue 36. Le ressort de torsion 47 contraint le décrotteur 34 contre la bande roulante 331 de la roue de manière à décoller la terre et les résidus qui pourraient y adhérer.

Un premier bras de roue 36 présente une butée d'escamotage 45 sur son extrémité proximale 362, c'est-à-dire opposée à l'extrémité avant sur laquelle est ici montée la roue de rappui 330 par rapport au pivot 42. Comme il sera expliqué plus loin, la butée d'escamotage 45 est destinée à permettre l'escamotage de la roue de rappui 330. La butée d'escamotage 45 est ici en saillie du bras 36. La butée d'escamotage 45 est préférentiellement ménagée sur une partie de l'axe 450 saillant du premier bras 36 vers l'extérieur (figure 3). Dans le cas présent, la butée 45 est l'extrémité d'une tige de vis (figure 4). En variantes non illustrées, la butée d'escamotage peut être une prolongation de l'axe 450. La butée 45 peut encore être un élément distinct de l'axe 450, tel qu'une tige métallique ou un autre organe rigide. La butée 45 peut alors par exemple être non alignée avec l'axe 450, ou encore être formée de corps avec l'un des bras de roue 36.

Le deuxième bras de roue 36 présente ici une butée 48 dite butée basse disposée de manière à limiter la course de descente de l'organe de rappui 33 lors du relevage de l'élément semeur 5 et donc de la machine. Ici, la butée 48 prend la forme d'un repli du bras de roue 36 à l'opposé du pivot 42. La butée 48 est destinée à entrer en contact avec la partie arrière 20 du châssis 19 au relevage.

Le dispositif de réglage 30 comporte un organe d'ajustement 31 (figure 4) et un premier organe de positionnement 32 (figure 2).

L'organe d'ajustement 31 comporte un bras de manipulation 35 et un organe de liaison élastique 37 (figure 4). Dans le mode de réalisation illustré en figures 4 et 5, l'organe de liaison élastique 37 est du type à boudins en élastomère. L'organe de liaison élastique 37 présente alors une coque 370, par exemple de section carrée ou de section carrée aux angles arrondis, alignée sur l'axe 420. Une broche interne 371 est disposée dans la coque 370. Des boudins 372 en élastomère, par exemple au nombre de quatre, sont intercalés entre la coque 370 et la broche interne 371. Pour le maintien de la broche interne 371 en position entre les pattes 28, la broche interne 371 peut être fixée sur une tige filetée non illustrée. L'organe de liaison élastique 37 décrit ci-dessus et illustré en section en figure 5 est appelé tube de torsion dans la présente description.

Les bras de roue 36 et l'entretoise 360 sont montés sur la coque. La broche interne est montée pivotante par rapport au châssis 19 et forme la référence d'axe 420 du pivot 42.

Le bras de manipulation 35 est ici pourvu d'une poignée 40 en une extrémité supérieure et d'un ergot 43 en une extrémité inférieure. Le bras de manipulation 35 est également monté sur le pivot 42. Le bras de manipulation 35 forme ainsi un levier d'ajustement pour le dispositif de réglage 30.

La poignée 40 comporte aussi un deuxième organe de positionnement 41 qui prend ici la forme d'un pion, par exemple une tige de vis. Le pion 41 s'étend transversalement à l'orientation générale de la poignée 40.

L'ergot 43 présente une encoche 44 sur son côté inférieur. L'encoche 44 est destinée à coopérer avec la butée 45 du bras de roue 36.

Le premier organe de positionnement 32 se présente ici sous la forme d'une petite plaque en forme de croix. Des moyens de positionnement 51, 52, 53, 54 et 55, qui sont ici des perforations, sont aménagés dans la paroi de la plaque 32 (figures 2 et 3). Les perforations 51 à 55 sont ici disposées en arc de cercle, sur un seul rang. Les perforations 51 à 55 sont ici traversantes, non limitativement.

Le deuxième organe de positionnement 41 est configuré pour coopérer à correspondance de forme avec les moyens de positionnement 51 à 55. Dans le cas présent, le pion 41 est logé dans une perforation 51, 52, 53, 54 ou 55 selon le réglage souhaité pour le dispositif de rappui 29. Comme illustré, les perforations 51 à 55 peuvent avoir une forme oblongue pour permettre un léger débattement du pion 41 prévu pour y être logé.

Des éléments de fixations 56, ici des vis, représentées contre la plaque 32, sont prévus et destinés à fixer la plaque 32 non limitativement à la branche arrière 20 du châssis 19.

L'axe 420 du pivot 42 forme axe de rotation commun pour le bras de manipulation 35, les bras de roue 36, et ici, le tube de torsion 37.

L'organe de liaison élastique 37 a pour rôle d'exercer une force positive (force de lestage) ou une force négative (force de délestage) sur l'organe de rappui 33, c'est-à-dire ici sur les bras de roue 36 et la roue de rappui 330.

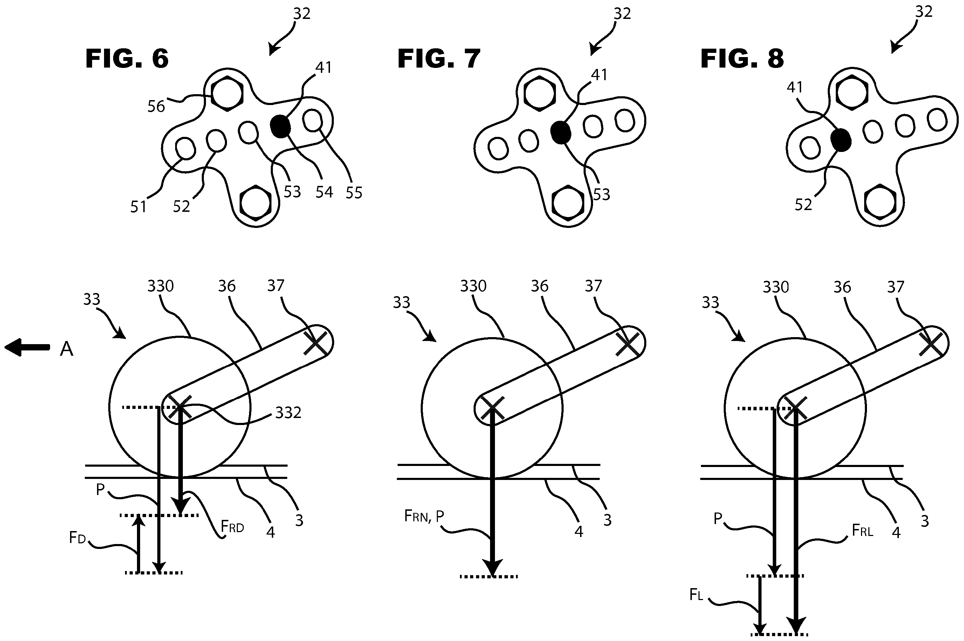

Dans le mode de réalisation représenté, les moyens de positionnement 51 à 55 sont positionnés de manière à offrir au dispositif de réglage 30 plusieurs positions de travail : une position neutre, deux positions de rappui renforcé, une position escamotée et une position de délestage. Les figures 6 à 8 représentent schématiquement, non limitativement, ces différentes positions de travail qui correspondent à différents réglages que peut admettre le dispositif de réglage 30. Pour une raison de simplicité, les seules forces représentées aux figures 6 à 8 et décrites ci-après sont les forces jouant sur la pression de rappui sur les graines, et plus précisément les seules composantes verticales de ces forces. Egalement pour une raison de simplicité, le point d'application de ces forces est représenté comme appartenant au moyeu 332 de la roue d'appui 330 (figure 6), étant entendu que ce dernier ne constitue pas en réalité le centre de gravité de l'organe de rappui 33.

Pour changer le réglage du dispositif de réglage 30, le pion 41 est extrait du moyen de positionnement 51, 52, 53, 54 ou 55 dans lequel il est engagé, puis engagé dans un autre moyen de positionnement 51, 52, 53, 54 ou 55. Le bras de manipulation 35 est configuré suffisamment flexible pour permettre le désengagement et le réengagement du premier et du deuxième organe de positionnement 32 et 41 l'un par rapport à l'autre.

En position de rappui neutre, ou plus simplement en position neutre (figure 7), l'organe de liaison élastique 37 n'exerce aucune contrainte sur les bras de roue 36. Seul le poids P de l'organe de rappui 33 agit sur les graines dans le sillon. Le pion 41 est logé dans une perforation correspondante qui est ici la troisième perforation 53, disposée entre les perforations 51 et 55 situées aux extrémités opposées de la plaque 32. La force d'appui résultante F_{RN}, en position neutre, est donc sensiblement égale au poids P de l'organe de rappui 33.

Dans les positions de rappui renforcé, l'organe de liaison élastique 37 exerce une contrainte de lestage F_{L} sur les bras de roue 36. Le pion 41 est ici logé dans l'une ou l'autre des perforations 51 et 52 situées le plus en avant par rapport au châssis 19. Dans l'exemple illustré en figure 8, le pion 41 est logé dans la perforation 52. L'organe de liaison élastique 37 est placé sous contrainte par l'enchâssement du pion 41 dans la perforation correspondante. L'organe de liaison élastique 37 tend alors à repousser la roue de rappui 330 vers le bas, c'est-à-dire vers le fond de sillon 4. La contrainte de rappui F_{RL} s'exerçant sur l'organe de rappui 33 et résultant du lestage est alors plus importante que le poids propre P de l'organe de rappui 33.

En position escamotée (non illustrée), l'ergot 43 est en butée contre la butée 45 et la roue de rappui 330 est relevée. La roue 330 est maintenue à distance du fond de sillon 4 par l'engagement du pion 41 dans la perforation 55 (qui est ici la perforation la plus en arrière par rapport au châssis 19).

En position de délestage (figure 6), enfin, l'organe de liaison élastique 37 exerce une contrainte de délestage F_{D} sur les bras de roue 36, c'est-à-dire sur l'organe de rappui 33. La contrainte de délestage F_{D} s'oppose au poids de l'organe de rappui 33. La contrainte de rappui F_{RD} résultant du délestage est alors moindre que le seul poids P de l'organe de rappui 33. Dans l'exemple illustré, le pion 41 est alors logé dans la quatrième perforation 54, c'est-à-dire celle située entre la perforation 53 (position neutre) et la perforation 55 (position escamotée). Cette position de délestage offre une solution particulièrement avantageuse dans certaines conditions d'humidité et sur certains sols. Elle est typiquement mise en oeuvre lorsqu'un rappui des graines s'impose pour favoriser le contact des graines avec le fond du sillon et optimiser leur germination, mais que l'humidité du sol est élevée ou que le sol est collant au point de provoquer en position de rappui neutre une adhérence de la terre et des graines à l'organe de rappui 33 au détriment de leur implantation dans le sillon 4.

Le nombre de moyens de positionnement 51 à 55 n'est pas limité à cinq. En variantes non illustrée, trois, quatre, six, sept ou plus moyens de positionnement peuvent être prévus. Dans ces variantes, un de ces moyens de positionnement offre également une position de délestage de l'organe de rappui 33.

Les caractéristiques des différentes positions et le nombre de positions peuvent être adaptées en dimensionnant le premier et le deuxième organe de positionnement. Le dispositif de rappui 29 peut par exemple adopter une unique position de rappui renforcé, ou un nombre de positions de rappui renforcé supérieur à deux, par exemple trois, quatre ou plus, en prévoyant un nombre correspondant de moyens de positionnement (un, trois, quatre ou plus). De manière analogue, le dispositif de rappui 29 peut également adopter une, trois, quatre ou plus positions de délestage. Préférentiellement, le dispositif de rappui 29 admet à la fois au moins une position de délestage et au moins l'une ou l'autre d'une position de rappui neutre ou de rappui renforcé.

En variante non illustrée, l'organe de liaison élastique 37 peut être remplacé (voire complété) par :
- un ressort de torsion monté autour de l'axe 420,
- un ressort hélicoïdal de traction ; une extrémité du ressort de traction est alors disposée sur le bras de manipulation 35, du côté de la poignée 40 par rapport au pivot 42, et une partie pivotant autour du pivot 42, c'est-à-dire non roulante, de l'organe de rappui 33, comme un bras de roue 36 ; en variante avantageuse, un ressort à spires non jointives permettra à la fois d'offrir au moins une position de délestage et au moins une position de lestage ;
- un ressort hélicoïdal de compression ; une extrémité du ressort de compression est alors disposée sur le bras de manipulation 35, du côté opposé à la poignée 40 par rapport au pivot 42, et une partie de l'organe de rappui 33 opposée à la surface prévue pour être en contact avec le sol par rapport au pivot 42, par exemple l'extrémité du bras de roue 36 portant la butée.

Dans une autre variante non illustrée, le premier organe de positionnement et le deuxième organe de positionnement sont configurés différemment des organes 32 et 41 décrits ci-dessus. Les moyens de positionnement 51, 52, 53, 54 et 55 sont par exemple des organes en saillie, tels que des pions, tandis que le deuxième organe de positionnement peut être une perforation, traversante ou non, formée dans le bras de manipulation 35.

En variante non illustrée, le premier organe de positionnement est de forme différente de celle décrite ci-dessus et illustrée. Le premier organe de positionnement est par exemple formé de corps avec la partie arrière 20 du châssis 19. Les moyens de positionnement peuvent alors être ménagés en saillie ou en creux dans la masse de la partie arrière 20.

D'une manière générale, le premier organe de positionnement 32 est ici arrangé sur le châssis 19 et le deuxième organe de positionnement 41 est arrangé sur le bras de manipulation 35. Dans ce paragraphe, le terme « arrangé » doit être compris comme englobant aussi bien les variantes dans lesquelles l'organe de positionnement respectif est disposé et fixé contre -ou par rapport à- la partie de l'élément semeur 5 correspondante (par exemple : le premier organe de positionnement 32 fixé sur le châssis 19), que les variantes dans lesquelles l'organe de positionnement respectif est formé de corps avec la partie de l'élément semeur 5 correspondante.

En variante non illustrée, la butée d'escamotage 45 est absente. Le démontage du dispositif de rappui 29 peut alors s'imposer ou l'organe de liaison élastique 37 assure l'escamotage de l'organe de rappui 33, dans un état de compression extrême de l'organe de liaison élastique 37 (respectivement un état d'élongation extrême dans le cas d'un ressort de traction).

Des combinaisons des variantes décrites ci-dessus sont envisageables, par exemple en ce qui concerne le nombre des moyens de positionnement, la forme que prennent le premier organe de positionnement et l'organe de liaison élastique.

En variante non illustrée, l'organe de rappui 33 comporte ou est constitué par une languette de rappui. La languette de rappui peut alors se substituer à la roue de rappui 330 et au(x) bras de roue 36.

En autre variante non illustrée, l'organe de rappui 33 s'étend vers l'arrière de sorte que la roue est tirée par le châssis 19 plutôt que poussée.

Dans l'élément semeur 5 décrit ci-dessus, comportant un dispositif de rappui 29 offrant une position de délestage, les graines peuvent être transportées depuis l'organe de distribution 33 vers le sillon par pression d'air ou par gravité.

En variante non illustrée, l'organe de rappui 33 peut comporter un mécanisme déformable. Ce mécanisme déformable est par exemple un parallélogramme déformable. Un tel parallélogramme déformable comporte alors quatre pivots : deux pivots du côté de l'attache du parallélogramme sur le châssis 19 et deux pivots du côté opposé à l'attache. Ce mécanisme déformable peut porter un moyen de rappui prévu pour être en contact avec le fond du sillon 4, tel que décrit ci-dessus (roue de rappui ou languette de rappui). La roue de rappui peut alors être montée pivotante soit directement sur un pivot inférieur du mécanisme déformable, soit sur une pièce solidaire des deux pivots opposés à l'attache. La languette de rappui peut également être montée sur une pièce solidaire des deux pivots opposés à l'attache, ou solidaire des deux pivots inférieurs. Un mécanisme de tension entre les bras inférieurs et supérieur du parallélogramme est préférentiellement prévu.

## Revendications

1. Elément semeur de machine agricole, comportant un organe de distribution de graines (23) et un dispositif de rappui (29), le dispositif de rappui (29) étant disposé derrière une sortie (25) de l'organe de distribution de graines (23) dans une direction d'avance au travail de l'élément semeur,
le dispositif de rappui (29) comportant un dispositif de réglage (30) et un organe de rappui (33), l'organe de rappui (33) étant configuré pour exercer au sol une force de rappui (F_{RD}, F_{RN}, F_{RL}) dans au moins une position de travail du dispositif de réglage (30),
l'organe de rappui (33) comportant une roue de rappui (330) évoluant en fond de sillon (4), **caractérisé**
**en ce que** l'au moins une position de travail du dispositif de réglage (30) est configuré pour une position de délestage dans laquelle le dispositif de réglage (30) exerce sur l'organe de rappui (33) une contrainte de délestage (F_{D}) opposée au poids (P) de l'organe de rappui (33).

2. Elément semeur selon la revendication précédente, dans lequel le dispositif de réglage (30) comporte un organe de liaison élastique (37), l'organe de liaison élastique (37) exerçant la contrainte de délestage (F_{D}) sur l'organe de rappui (33) dans la position de délestage.

3. Elément semeur selon l'une des revendications précédentes, le dispositif de réglage (30) comportant un bras de manipulation (35), la position du bras de manipulation (35) déterminant la contrainte de délestage (F_{D}) que l'organe de liaison élastique (37) exerce sur l'organe de rappui (33) en position de délestage.

4. Elément semeur selon la revendication précédente, le dispositif de réglage (30) comportant au moins un premier organe de positionnement (32, 51-55) et au moins un deuxième organe de positionnement (41) prévu à correspondance de forme avec le premier organe de positionnement (32, 51-55), le premier organe de positionnement (32, 51-55) et le deuxième organe de positionnement (41) étant configurés pour être retenus l'un contre l'autre dans la position de délestage du dispositif de rappui (30).

5. Elément semeur selon la revendication précédente, l'élément semeur comportant un châssis (19), le premier organe de positionnement (32, 51-55) étant arrangé sur le châssis (19) et le deuxième organe de positionnement (41) étant arrangé sur le bras de manipulation (35).

6. Elément semeur selon l'une des revendications 4 et 5, le premier organe de positionnement (32) comportant au moins une perforation (51-55), le deuxième organe de positionnement comportant au moins un pion (41), le pion (41) étant en correspondance de forme avec l'au moins une perforation (51-55).

7. Elément semeur selon l'une des revendications 2 à 5, l'organe de liaison élastique (37) comportant un tube de torsion, un ressort de traction, un ressort de compression ou un ressort de torsion.

8. Elément semeur selon l'une des revendications précédentes, le dispositif de réglage (30) admettant plusieurs positions de travail, l'une des positions de travail étant ladite position de délestage.

9. Elément semeur selon la revendication 7, dans lequel le dispositif de réglage (30) admet une position de rappui renforcé dans laquelle au moins une force de rappui renforcé de l'organe de rappui (33) résulte de l'application d'une contrainte verticale sur l'organe de rappui (33) par l'organe de liaison élastique (37), et/ou le dispositif de réglage (30) admet une position de rappui neutre dans laquelle une force de rappui neutre de l'organe de rappui (33) résulte exclusivement du poids propre de l'organe de rappui (33).

10. Elément semeur selon la revendication 7, dans lequel le dispositif de réglage (30) admet une position escamotée dans laquelle l'organe de rappui (33) est configuré pour être hors de contact avec le sol.

11. Semoir comportant un élément semeur (5) selon l'une des revendications précédentes.

## Patentansprüche

1. Säelement einer landwirtschaftlichen Maschine mit einem Saatablageelement (23) und einer Rückverfestigungsvorrichtung (29), wobei die Rückverfestigungsvorrichtung (29) hinter einer Mündung (25) des Saatablageelements (23) in einer Arbeitsvorschubrichtung des Säelements angeordnet ist,
wobei die Rückverfestigungsvorrichtung (29) eine Einstellvorrichtung (30) und ein Rückverfestigungselement (33) umfasst, wobei das Rückverfestigungselement (33) ausgestaltet ist, um auf den Boden einen Rückverfestigungsdruck (F_{RD}, F_{RN}, F_{RL}) in wenigstens einer Arbeitsstellung der Einstellvorrichtung (30) auszuüben,
wobei das Rückverfestigungselement (33), das ein Rückverfestigungsrad (330) umfasst, das sich am Boden der Furche (4) bewegt, ***dadurch gekennzeichnet, dass*** mindestens eine Arbeitsstellung der Einstellvorrichtung (30) für eine Entlastungsstellung ausgestaltet ist, in der die Einstellvorrichtung (30) auf das Rückverfestigungselement (33) eine Entlastungsbeanspruchung (F_{D}) ausübt, die dem Gewicht (P) des Rückverfestigungselements (33) entgegengesetzt ist.

2. Säelement nach dem vorhergehenden Anspruch, wobei die Einstellvorrichtung (30) ein elastisches Verbindungselement (37) umfasst, wobei das elastische Verbindungselement (37) die Entlastungsbeanspruchung (F_{D}) auf das Rückverfestigungselement (33) in der Entlastungsstellung ausübt.

3. Säelement nach einem der vorhergehenden Ansprüche, wobei die Einstellvorrichtung (30) einen Bedienungsgriff (35) umfasst, wobei die Stellung des Bedienungsgriffs (35) die Entlastungsbeanspruchung (F_{D}) bestimmt, welche das elastische Verbindungselement (37) auf das Rückverfestigungselement (33) in Entlastungsstellung ausübt.

4. Säelement nach dem vorhergehenden Anspruch, wobei die Einstellvorrichtung (30) wenigstens ein erstes Positionierelement (32, 51-55) und wenigstens ein zweites Positionierelement (41) umfasst, das formübereinstimmend mit dem ersten Positionierelement (32, 51-55) vorgesehen ist, wobei das erste Positionierelement (32, 51-55) und das zweite Positionierelement (41) ausgestaltet sind, in der Entlastungsstellung der Rückverfestigungsvorrichtung (30) gegeneinander gehalten zu werden.

5. Säelement nach dem vorhergehenden Anspruch, wobei das Säelement einen Rahmen (19) umfasst, wobei das erste Positionierelement (32, 51-55) auf dem Rahmen (19) angeordnet ist und das zweite Positionierelement (41) auf dem Bedienungsgriff (35) angeordnet ist.

6. Säelement nach einem der Ansprüche 4 und 5, wobei das erste Positionierelement (32) wenigstens eine Bohrung (51-55) umfasst, wobei das zweite Positionierelement wenigstens einen Zapfen (41) umfasst, wobei der Zapfen (41) formübereinstimmend mit der wenigstens eine Bohrung (51-55) ausgeführt ist.

7. Säelement nach einem der Ansprüche 2 bis 5, wobei das elastische Verbindungselement (37) ein Torsionsrohr, eine Zugfeder, eine Druckfeder oder eine Torsionsfeder umfasst.

8. Säelement nach einem der vorhergehenden Ansprüche, wobei die Einstellvorrichtung (30) mehrere Arbeitsstellungen zulässt, wobei eine der Arbeitsstellungen die Entlastungsstellung ist.

9. Säelement nach Anspruch 7, wobei die Einstellvorrichtung (30) eine verstärkte Rückverfestigungsstellung zulässt, in der wenigstens ein verstärkter Rückverfestigungsdruck des Rückverfestigungselements (33) aus dem Einsatz einer vertikalen Beanspruchung auf das Rückverfestigungselement (33) durch das elastische Verbindungselement (37) resultiert, und/oder wobei die Einstellvorrichtung (30) eine neutrale Rückverfestigungsstellung zulässt, in der ein neutraler Rückverfestigungsdruck des Rückverfestigungselements (33) ausschließlich aus dem Eigengewicht des Rückverfestigungselements (33) resultiert.

10. Säelement nach Anspruch 7, wobei die Einstellvorrichtung (30) eine eingefahrene Stellung zulässt, in der das Rückverfestigungselement (33) ausgestaltet ist, ohne mit dem Boden in Kontakt zu sein.

11. Sämaschine mit einem Säelement (5) nach einem der vorhergehenden Ansprüche.

## Claims

1. Seeder element for agricultural machine, comprising a seed-distributing element (23) and a tamping device (29), the tamping device (29) being positioned behind an outlet (25) of the seed-distributing element (23) in a direction of advance at work of the seeder element,
the tamping device (29) comprising an adjustment device (30) and a tamping element (33), the tamping element (33) being configured to exert a tamping force (F_{RD}, F_{RN}, F_{RL}) on the ground in at least one work position of the adjustment device (30),
the tamping element (33) comprising a tamping wheel (330) moving at the bottom of the furrow (4),
***characterised in that*** the at least one work position of the adjustment device (30) is configured for a load-relieving position in which the adjustment device (30) exerts, on the tamping element (33), a load-relieving stress (F_{D}) that counters the weight (P) of the tamping element (33).

2. Seeder element according to the previous claim, in which the adjustment device (30) comprises a flexible connecting element (37), the flexible connecting element (37) exerting the load-relieving stress (F_{D}) on the tamping element (33) in the load-relieving position.

3. Seeder element according to one of the previous claims, the adjustment device (30) comprising a handling arm (35), the position of the handling arm (35) determining the load-relieving stress (F_{D}) that the flexible connecting element (37) exerts on the tamping element (33) in the load-relieving position.

4. Seeder element according to the previous claim, the adjustment device (30) comprising at least one first positioning element (32, 51-55) and at least one second positioning element (41) provided to match the shape of the first positioning element (32, 51-55), the first positioning element (32, 51-55) and the second positioning element (41) being configured to be held against each other in the load-relieving position of the tamping device (30).

5. Seeder element according to the previous claim, the seeder element comprising a chassis (19), the first positioning element (32, 51-55) being arranged on the chassis (19) and the second positioning element (41) being arranged on the handling arm (35).

6. Seeder element according to one of claims 4 and 5, the first positioning element (32) comprising at least one drilling hole (51-55), the second positioning element comprising at least one pin (41), the shape of the pin (41) matching that of the at least one drilling hole (51-55).

7. Seeder element according to one of claims 2 to 5, the flexible connecting element (37) comprising a torque tube, a tension spring, a compression spring or a torsion spring.

8. Seeder element according to one of the previous claims, the adjustment device (30) admitting several work positions, one of the work positions being the said load-relieving position.

9. Seeder element according to claim 7, in which the adjustment device (30) admits a reinforced tamping position in which at least one reinforced tamping force of the tamping element (33) results from the application of a vertical stress on the tamping element (33) by the flexible connecting element (37), and/or the adjustment device (30) admits a neutral tamping position in which a neutral tamping force of the tamping element (33) results exclusively from the own weight of the tamping element (33).

10. Seeder element according to claim 7, in which the adjustment device (30) admits a retracted position in which the tamping element (33) is configured to be off the ground.

11. Seeder comprising a seeder element (5) according to one of the previous claims.
